(19) Europäisches Patentamt
European Patent Office
Office européen des brevets

(11) **EP 3 231 099 B1**

(12) **FASCICULE DE BREVET EUROPEEN**

(45) Date de publication et mention
de la délivrance du brevet:
**12.08.2020 Bulletin 2020/33**

(21) Numéro de dépôt: **15804168.1**

(22) Date de dépôt: **16.11.2015**

(51) Int Cl.:
***H04B 3/54*** *(2006.01)*

(86) Numéro de dépôt international:
**PCT/FR2015/053074**

(87) Numéro de publication internationale:
**WO 2016/092166 (16.06.2016 Gazette 2016/24)**

(54) **SYNCHRONISATION D'UN RÉSEAU CPL**

SYNCHRONISIERUNG EINES PLC-NETZWERKS

SYNCHRONISATION OF A PLC NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.12.2014 FR 1462221**

(43) Date de publication de la demande:
**18.10.2017 Bulletin 2017/42**

(73) Titulaire: **Electricite Reseau Distribution France
92079 Paris La Defense Cedex (FR)**

(72) Inventeur: **ACHAICHIA, Pierre
69003 Lyon (FR)**

(74) Mandataire: **Plasseraud IP
66, rue de la Chaussée d'Antin
75440 Paris Cedex 09 (FR)**

(56) Documents cités:
**WO-A1-2012/076133**

• **FRANK H ET AL: "Clock synchronization of distributed computers in building automation networks using an AC power supply", INDUSTRIAL ELECTRONICS, 2008. IECON 2008. 34TH ANNUAL CONFERENCE OF IEEE, IEEE, PISCATAWAY, NJ, USA, 10 novembre 2008 (2008-11-10), pages 2730-2735, XP031825841, ISBN: 978-1-4244-1767-4**
• **LO BELLO L ET AL: "L-PTP: A novel clock synchronization protocol for Powerline networks", PROCEEDINGS OF 2012 IEEE 17TH INTERNATIONAL CONFERENCE ON EMERGING TECHNOLOGIES & FACTORY AUTOMATION (ETFA 2012) : KRAKOW, POLAND, 17 - 21 SEPTEMBER 2012, IEEE, PISCATAWAY, NJ, 17 septembre 2012 (2012-09-17), pages 1-4, XP032350313, DOI: 10.1109/ETFA.2012.6489774 ISBN: 978-1-4673-4735-8**

EP 3 231 099 B1

Printed by Jouve, 75001 PARIS (FR)

**Description**

La présente invention appartient au domaine de la synchronisation de stations comprises dans un réseau CPL, pour Courant Porteur en Ligne. Elle concerne en particulier un procédé de synchronisation exploitant le synchronisme du courant alternatif du réseau CPL entre les différentes stations du réseau CPL.

Cette méthode est particulièrement avantageuse dans le cas de stations comprises dans un réseau CPL, de type CPL-G3, pouvant être utilisé pour la collecte de mesures de comptage ou pour d'autres fonctions plus avancées, liées par exemple à la conduite d'un réseau de distribution d'électricité.

On entend par « synchronisation », l'action de coordonner les stations du réseau CPL entre elles en fonction du temps.

On entend par « réseau CPL », l'ensemble des canaux et des nœuds constituant un réseau de communication reposant sur un réseau de distribution d'électricité. Le réseau CPL-G3 est notamment décrit dans le document « G3-PLC Alliance - G3-PLC Spécifications - CENELEC - ARIB - FCC - 2014-06: Narrowband Orthogonal Frequency Division Multiplexing Power Line Communication Transceivers for G3-PLC Networks ».

On entend par « courant alternatif du réseau CPL », tout courant alternatif de puissance du réseau de distribution d'électricité sur lequel repose le réseau CPL. Ce courant alternatif peut être constitué d'un unique signal comme d'une pluralité de signaux déphasés.

Pour assurer un fonctionnement optimal d'un réseau de distribution d'électricité, il est pertinent de prévoir des stations chargées d'acquérir des grandeurs caractéristiques de l'état local du réseau et chargées de moduler la charge électrique au sein du réseau. Ces stations sont généralement reliées à au moins un centre de conduite de réseau qui supervise l'ensemble du réseau.

Un important réseau de voies de télécommunication fiables et sécurisées est nécessaire pour échanger les informations issues des stations avec le centre de conduite. En particulier, les instructions de modification de la répartition des charges au sein du réseau de distribution d'électricité doivent pouvoir être mises en œuvre précisément au même instant entre les différentes stations pour éviter tout phénomène de surcharge électrique locale.

Actuellement, les horloges internes des stations peuvent différer de plusieurs secondes entre différentes stations d'un réseau CPL. Le mécanisme de synchronisation est en effet exécuté au niveau applicatif, sans prendre en compte les délais de transmission au sein du réseau CPL.

En particulier, la norme IEC 61588, issue de la norme IEEE 1588 et décrite notamment dans le document « IEC 61588 - 2009 - Precision clock synchronization protocol for networked measurement and control systems », détaille un mécanisme de synchronisation de stations d'un réseau de télécommunications. Cette norme donne une valeur indicative d'environ une microseconde pour la précision obtenue avec ce mécanisme de synchronisation.

Cette norme définit le protocole PTP, pour « Précision Time Protocol », protocole temporel de précision en français. Le principe de PTP est le suivant : une station « maitre » contient l'horloge de référence du réseau, « grandmaster clock » en anglais. La synchronisation est réalisée par l'échange de messages de synchronisation entre le maitre et des stations « esclaves » de son réseau. Ces messages contiennent des informations temporelles à partir desquelles les stations esclaves synchronisent leurs horloges.

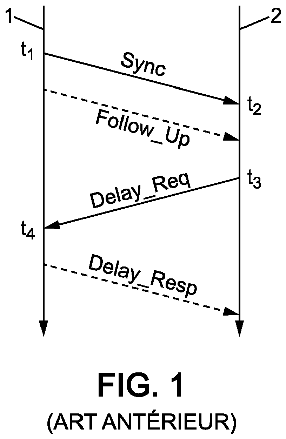

En particulier, PTP définit un procédé détaillé ci-après en référence à la figure 1 pour que les stations esclaves puissent estimer le délai de propagation des messages de synchronisation afin de corriger la valeur de l'horloge de référence communiquée. Ce processus en plusieurs étapes nécessite l'échange de plusieurs messages entre le maitre et un esclave comme l'illustre la figure 1.

Sur la figure 1, l'axe 1 est un axe temporel correspondant à la station maitre et l'axe 2 est un axe temporel correspondant à la station esclave. Le procédé comprend les étapes suivantes :

    a) la station maitre envoie un message Sync et note l'heure $t_1$ à laquelle elle a envoyé le message ;
    b) la station esclave reçoit le message Sync et note l'heure $t_2$ à laquelle elle a reçu le message ;
    c) la station maitre envoie le message Follow_Up contenant $t_1$ ;
    d) la station esclave envoie un message Delay_Req et note l'heure $t_3$ à laquelle elle a envoyé le message ;
    e) la station maitre reçoit le message Delay_Req et note l'heure $t_4$ à laquelle elle a reçu le message ;
    f) la station maitre envoie le message Delay_Resp contenant $t_4$ ;

En prenant pour hypothèse que le délai de propagation, *delay,* des messages entre la station maitre et la station esclave est symétrique, la connaissance des 4 temps $t_1$, $t_2$, $t_3$ et $t_4$, permet à la station esclave d'établir le système d'équations suivant :

$$\begin{cases} t_2 - t_1 = offset + delay \\ t_4 - t_3 = delay - offset, \end{cases}$$

avec *offset* la valeur du décalage de l'horloge de la station esclave avec l'horloge de référence.

Ainsi, PTP fait l'hypothèse que le délai de propagation des messages est symétrique. Or, d'une part, dans un réseau CPL, la couche physique adapte le signal au canal de communication qui, par nature, est asymétrique.

D'autre part, le délai *delay* inclut le temps de traitement de la couche physique du récepteur. Or, dans des conditions d'interopérabilité entre les différents matériels équipant les stations, les performances de traitement varient sensiblement en fonction des stations. Le délai ne peut donc pas être symétrique dans de telles conditions.

Ainsi, la précision annoncée par la norme IEC 61588 n'est pas respectée dans le cas d'une implémentation de cette norme au réseau CPL.

En outre, le nombre de messages échangés (trafic de signalisation) pour la mise en œuvre de ce protocole est trop important pour le réseau CPL. En effet, la bande passante disponible dans un réseau CPL rend peu recommandable l'usage de protocoles dont le trafic de signalisation est important.

Ainsi, les procédés de synchronisation actuels, tel que celui défini par la norme IEC 61588, ne sont pas adaptés au réseau CPL. De nombreuses fonctions relatives à la conduite de réseau ne peuvent donc pas être assurées par un réseau CPL en raison d'une synchronisation défaillante des différentes stations du réseau CPL.

On connait du document D1 : Clock Synchronization of Distributed Computers in Building Automation Networks Using an AC Power Supply ; H. Frank ; A. Mittnacht, D. Rappold ; S. Mahlknecht ; Vienna University of Technology**,** un procédé de synchronisation des horloges de dispositifs domotiques dans un réseau de communication situé dans un bâtiment. La synchronisation repose sur la détection de références temporelles communes entres les stations, ces références temporelles communes étant déterminées à partir d'un signal AC disponible dans le bâtiment.

Déjà l'enseignement de ce document n'est pas explicitement destiné à un réseau CPL. D'ailleurs, ce document précise explicitement que les messages de signalisation sont transmis par des trames UDP/IP sur un réseau Ethernet. Il est donc nécessaire dans cette technique de prévoir des infrastructures réseaux en plus du réseau de distribution d'électricité déjà existant. Le document D2 : WO 2012/076133 divulgue une méthode pour réduire les interférences temporelles (« network misalignment ») entre deux réseaux voisins, et en particulier entre les cycles MAC des deux réseaux voisins, mais n'apporte pas de solution claire à la mise à jour, en pratique, d'un signal d'horloge de la station esclave. En particulier, là encore, le document n'aborde pas les moyens mis en œuvre pour la communication d'éventuelles trames de synchronisation notamment pour une station esclave.

La présente invention vient améliorer la situation.

A cet effet, un premier aspect de l'invention concerne un procédé de synchronisation d'un signal d'horloge d'une station esclave avec un signal d'horloge d'une station maitre, le signal d'horloge de la station maitre étant donné par un moyen externe de référence, les deux stations étant reliées par un réseau de Courant Porteur en Ligne, CPL, comportant les étapes de :

- détermination d'une référence temporelle commune aux deux stations à partir d'un courant alternatif du réseau CPL ;

- mise à jour du signal d'horloge de la station esclave par application d'une valeur d'horloge déterminée à partir de la référence temporelle commune,

la référence temporelle commune étant transmise de la station maître à destination de la station esclave via le réseau CPL.

On entend par « station maitre », une station maitre du temps en ce qu'elle comporte une horloge interne exacte. A partir de cette horloge interne exacte, la station maitre peut déterminer une valeur de temps exacte à tout instant. En outre, cette station maitre fait bénéficier une station esclave de sa maitrise du temps. On entend donc par « station esclave » une station qui voit son horloge interne fixée par une autre station, la station maitre.

Le courant alternatif est synchrone en tous points du réseau de distribution d'électricité. Ceci signifie que ce courant prend une valeur identique au niveau de toutes les stations à un instant donné. Ainsi, il est possible d'établir une référence temporelle commune entre deux stations à partir du courant alternatif.

La précision temporelle donnée par la référence temporelle commune est directement reliée à la qualité du synchronisme du courant alternatif. Le synchronisme du courant alternatif étant très précis entre les différentes stations, la précision du procédé de synchronisation est sensiblement améliorée par rapport aux solutions précédemment proposées.

Dans un mode de réalisation, la référence temporelle commune est une valeur de temps donnée par le signal d'horloge de la station maitre, la valeur de temps correspondant à un premier moment où le courant alternatif atteint une valeur particulière. Ainsi, la station esclave peut identifier la valeur particulière sur le courant alternatif et associer cette valeur particulière à la référence temporelle commune.

En particulier, la valeur particulière peut-être atteinte quand le courant alternatif est nul et croissant. Si le courant alternatif est sinusoïdal, cette valeur particulière est prise à chaque nouvelle période. La détermination d'une telle valeur est facilement détectable au moyen de dispositifs électroniques simples, tel qu'un détecteur de « zero-crossing », pour croisement de zéro en français.

Dans un autre mode de réalisation, le procédé comporte les étapes de :

- génération par la station maitre d'une trame de synchronisation comportant la référence temporelle commune ;

- transmission de la trame de synchronisation de la station maitre vers la station esclave ;

- extraction par la station esclave de la référence temporelle commune à partir de la trame de synchronisation ;

- à un deuxième moment où le courant alternatif atteint la valeur particulière, le deuxième moment étant postérieur à l'extraction, au niveau de la station esclave :

  • détermination du nombre de périodes écoulées entre le premier moment et le deuxième moment ;

  • calcul de la valeur d'horloge par addition de la référence temporelle commune avec la durée correspondant au nombre de périodes écoulées ;

  • mise à jour du signal d'horloge de la station esclave par application de la valeur d'horloge au signal d'horloge de la station esclave au deuxième moment.

Ainsi, pour mettre à jour le signal d'horloge de la station esclave, il suffit que cette station esclave connaisse la référence temporelle commune. Seule l'émission d'un message depuis la station maitre vers la station esclave est donc requise pour la synchronisation. Ceci réduit le trafic de signalisation. En effet, en comptant le nombre de périodes prises par le courant alternatif entre la référence temporelle commune donnée par une horloge de référence et un instant précis (deuxième moment), identifié grâce au courant alternatif, on détermine simplement par addition une valeur d'horloge exacte à cet instant précis.

Une telle réduction du trafic de signalisation a pour conséquence de réduire l'impact du procédé de signalisation sur la bande passante globale du canal de communication du réseau CPL entre la station maitre et la station esclave.

Dans un autre mode de réalisation, le courant alternatif du réseau CPL comporte une pluralité de signaux périodiques, ces signaux étant déphasés les uns par rapport aux autres. La référence temporelle commune est alors une valeur de temps correspondant à un premier moment où un signal donné parmi la pluralité de signaux atteint une valeur particulière. Dans ce mode de réalisation, le procédé comporte les étapes de :

- génération par la station maitre d'une trame de synchronisation comportant la référence temporelle commune ;

- transmission de la trame de synchronisation de la station maitre vers la station esclave ;

- extraction par la station esclave de la référence temporelle commune à partir de la trame de synchronisation ;

- détermination du signal donné parmi la pluralité de signaux à partir d'une information de déphasage des signaux périodiques entre la station maitre et la station esclave ;

- à un deuxième moment où le signal donné atteint la valeur particulière, le deuxième moment étant postérieur à la détermination du signal donné, au niveau de la station esclave :

  • détermination du nombre de périodes écoulées entre le premier moment et le deuxième moment ;

  • calcul de la valeur d'horloge par addition de la référence temporelle commune avec la durée correspondant au nombre de périodes écoulées ;

  • mise à jour du signal d'horloge de la station esclave par application de la valeur d'horloge au signal d'horloge de la station esclave au deuxième moment.

L'adaptation du procédé selon l'invention à un courant alternatif comportant plusieurs signaux déphasés est complexe en ce qu'il est nécessaire d'identifier, au niveau de la station esclave, le signal à partir duquel la référence temporelle a été générée. Il faut en effet connaitre ce signal pour calculer sans erreurs le nombre de périodes écoulées entre le premier moment et le deuxième moment.

Or, pour des raisons liées à la gestion du réseau de distribution d'électricité, une information de déphasage des signaux du courant alternatif entre différentes stations directement voisines (pas d'intermédiaire entre les deux stations) est présente au niveau de chaque station. Ainsi, la connaissance par la station esclave de l'adresse de la station maitre lui permet d'identifier le déphasage de ses signaux du courant alternatif par rapport à ceux de la station maitre.

Dans un mode de réalisation, le réseau CPL répond à la norme ITU-T G.9903. De plus, l'information de déphasage est stockée au niveau de la station esclave et est donnée par la variable PhaseDifferential. Ainsi, l'étape de détermination du signal donné réutilise des informations déjà présentes au niveau de la station esclave. Ceci a pour effet de simplifier les calculs et réduit ainsi le temps de traitement tout en sollicitant moins le ou les processeurs utilisés pour ces calculs.

Dans un autre mode de réalisation, le moyen externe de référence est un serveur de type Network Time Protocol, NTP. Le « Network Time Protocol, NTP », ou protocole d'heure réseau, est un protocole largement diffusé à partir duquel une horloge de référence est obtenue. La diffusion large de ce protocole assure un accès aisé à ce type de serveur et l'obtention d'une valeur d'horloge fiable.

Un deuxième aspect de l'invention concerne un procédé de synchronisation des stations d'un réseau Courant Porteur en Ligne, CPL, le réseau comportant une station maitre et un ensemble comportant au moins deux stations esclaves. Ce procédé comporte :

- une première étape de mise en œuvre du procédé de synchronisation selon le premier aspect de l'invention entre la station maitre et une première pluralité de stations esclaves de l'ensemble qui sont voisines directes de la station maitre sur le réseau CPL ;
- une deuxième étape de mise en œuvre du procédé de synchronisation selon le premier aspect de l'invention entre la première pluralité de stations esclaves synchronisées lors de la première étape ci-dessus et une deuxième pluralité de stations esclaves de l'ensemble qui sont voisines directes d'au moins une station esclave de la première pluralité.

La deuxième étape est alors répétée jusqu'à ce que toutes les stations esclaves de l'ensemble aient été synchronisées. Ainsi, la totalité du réseau est synchronisée de proche en proche, grâce notamment aux informations de déphasage des signaux du courant alternatif d'une station par rapport aux signaux du courant alternatif d'une station proche voisine.

En outre, un tel procédé de synchronisation du réseau, de proche en proche, homogénéise les ressources requises pour la mise en œuvre de ce procédé entre toutes les stations. Ainsi, la première station à être synchronisée, par exemple par un serveur NTP, ne gère que la synchronisation de ses proches voisins. Le procédé de synchronisation n'impacte donc pas qu'une seule station puisque cet impact est réparti entre toutes les stations.

Dans un mode de réalisation du deuxième aspect de l'invention, la première étape comporte en outre l'incrémentation d'une variable de comptage au niveau des stations esclaves de la première pluralité. De plus, lors de la deuxième étape et des étapes ultérieures correspondantes aux répétitions de la deuxième étape, seules les stations esclaves de la deuxième pluralité pour lesquelles la variable de comptage est strictement inférieure à la variable de comptage des stations esclaves de la première pluralité sont synchronisées. Ainsi, le procédé de synchronisation n'est pas répété pour les stations qui ont déjà été synchronisées.

Un troisième aspect de l'invention concerne un programme informatique comportant des instructions pour la mise en œuvre du procédé selon l'une quelconque des revendications précédentes, lorsque ces instructions sont exécutées par un processeur.

Un quatrième aspect de l'invention concerne une station esclave reliée à un réseau de Courant Porteur en Ligne, CPL, comportant un signal d'horloge, la station esclave étant reliée à une station maitre par le réseau CPL, la station esclave comportant :

- des moyens de réception d'une référence temporelle commune aux deux stations à partir d'un courant alternatif du réseau CPL, la référence temporelle commune étant reçue depuis le réseau CPL ;

- un processeur agencé pour effectuer les opérations de :

    • calcul d'une valeur d'horloge à partir de la référence temporelle commune ;

    • mise à jour du signal d'horloge par application de la valeur d'horloge au signal d'horloge.

Un cinquième aspect de l'invention concerne une station maitre reliée à un réseau de Courant Porteur en Ligne, CPL, comportant un signal d'horloge, la station maitre étant reliée à une station esclave par le réseau CPL, la station maitre comportant :

- des moyens de communication avec un moyen externe de référence à partir duquel est déduit le signal d'horloge ;

- un processeur agencé pour effectuer une opération de détermination d'une référence temporelle commune aux deux stations à partir d'un courant alternatif du réseau CPL ;

- des moyens d'envoi de la référence temporelle commune via le réseau CPL.

Un sixième aspect de l'invention concerne un réseau de Courant Porteur en Ligne, CPL, le réseau comportant une station maitre et un ensemble comportant au moins deux stations esclaves, la station maitre et l'ensemble de stations esclaves comportant un processeur agencé pour la mise en œuvre du procédé selon le deuxième aspect de l'invention.

D'autres caractéristiques et avantages de l'invention apparaîtront à l'examen de la description détaillée ci-après, et des dessins annexés sur lesquels:

- la figure 1 illustre un procédé de synchronisation de l'art antérieur ;

- la figure 2 illustre un réseau CPL, selon un mode de réalisation de l'invention ;

- la figure 3 est un diagramme illustrant les étapes d'un procédé de synchronisation, selon un mode de réalisation de l'invention ;

- la figure 4A est une courbe illustrant un signal du courant alternatif, selon un mode de réalisation de l'invention ;

- la figure 4B est un chronogramme illustrant les étapes d'un procédé de synchronisation, selon un mode de réalisation de l'invention ;

- la figure 5 est une courbe illustrant des signaux du courant alternatif, selon un mode de réalisation de l'invention ;

- la figure 6 est un schéma illustrant un réseau CPL, selon un mode de réalisation de l'invention ;

- la figure 7 illustre un microcontrôleur, selon un mode de réalisation de l'invention.

L'invention est décrite ci-après dans son application, non limitative, à la collecte de mesures de comptage et à la conduite d'un réseau de distribution d'électricité. D'autres applications telles que la transmission de données à destination des particuliers sont également envisageables.

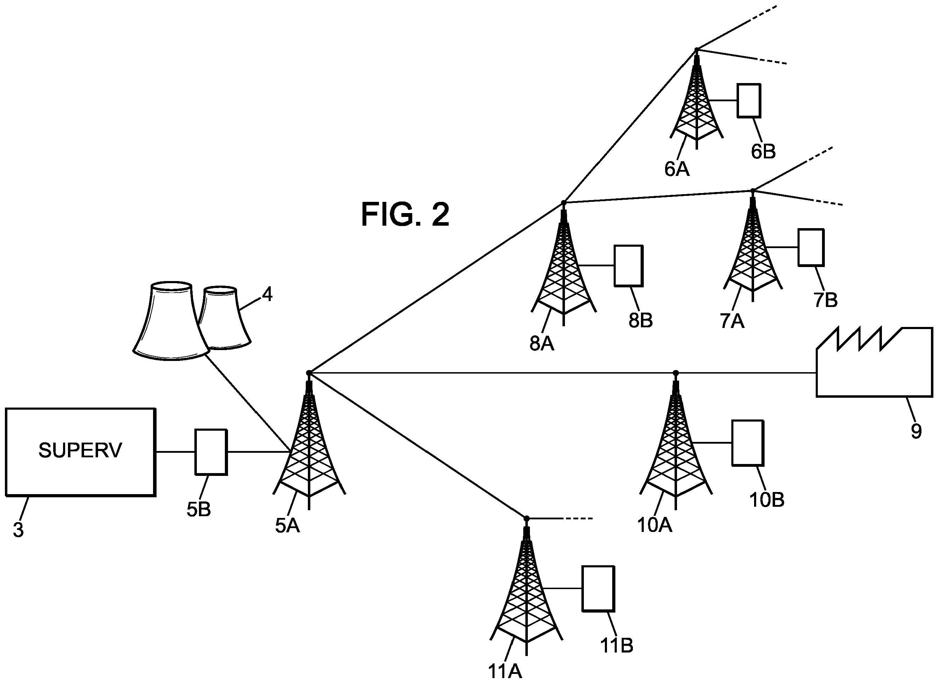

La **figure 2** représente un réseau de distribution d'électricité sur lequel s'appuie un réseau CPL. Dans un réseau CPL, certains des dispositifs en charge du transport d'électricité tels que lignes à haute tension ou câbles électriques sont également utilisés comme canaux de communication. Ces dispositifs sont donc utilisés pour véhiculer un courant électrique de puissance comportant plusieurs signaux de fréquence basse, 50 Hz par exemple, et un signal de fréquence haute, de l'ordre de la dizaine de MHz, pour la transmission d'informations.

Sur la figure 2, une centrale nucléaire 4 produit de l'électricité qui est distribuée sur un réseau de distribution d'électricité. Ce réseau de distribution comporte des lignes hautes et moyenne tension supportées notamment par des pylônes 5A, 6A, 7A, 8A, 10A et 11A. Ce réseau de distribution alimente en énergie différents consommateurs tels que l'usine 9. Les pointillés sur les lignes situés en aval des pylônes 6A, 7A et 11A signifient que le réseau de distribution s'étend au-delà de ce qui est représenté sur la figure 2.

La figure 2 illustre un réseau CPL utilisé pour la conduite et la surveillance du réseau de distribution d'électricité. Pour ce faire, des stations 5B, 6B, 7B, 8B, 10B et 11B comportent des composants tels que circuits imprimés, capteurs ou microcontrôleurs qui sont chargés d'acquérir des données de mesure, de modifier les facteurs de charge de certaines branches du réseau. En particulier, les stations 6B, 7B, 8B, 10B et 11B relèvent et traitent des données de comptage qui sont transmises, par le réseau CPL, à la station 5B qui transmet les données de comptage à un centre de supervision 3. Le centre de supervision 3 peut alors transmettre des instructions à certaines stations. Par exemple, la station 5B peut transmettre à la station 8B une instruction de réduction de la charge électrique affectée aux sous-branches qui sont reliées à cette station 8B.

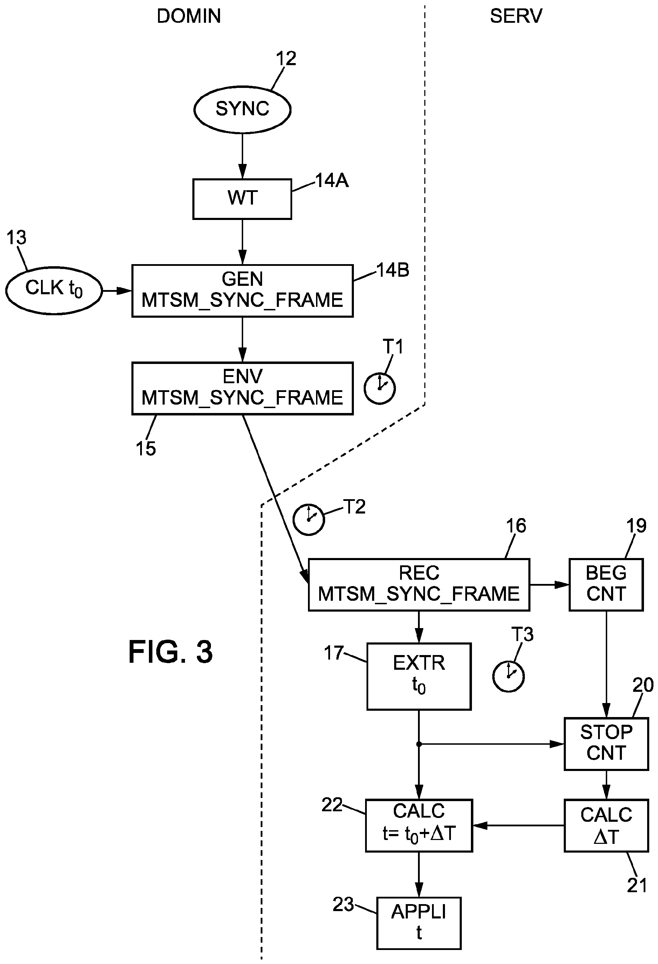

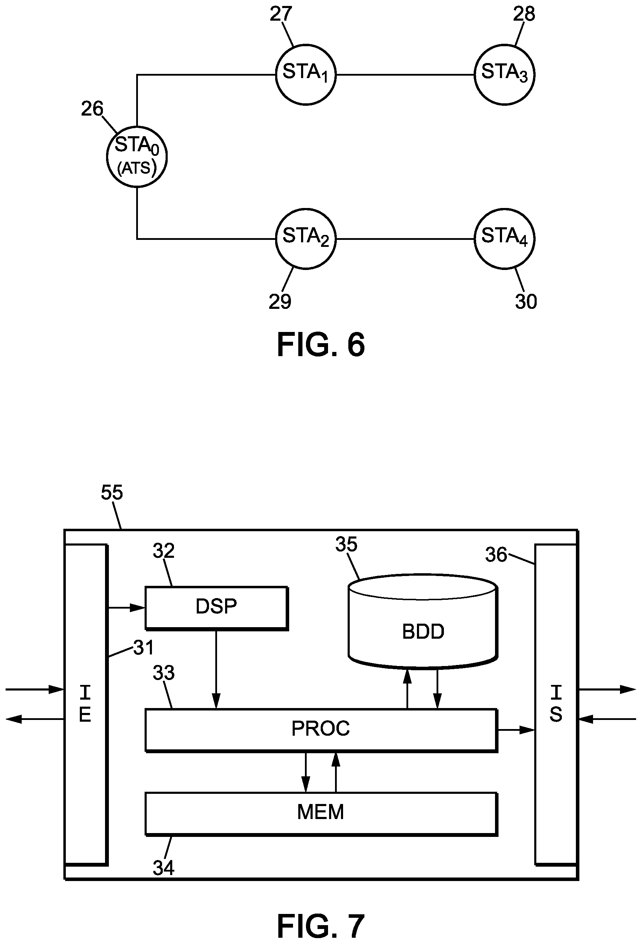

Les stations 5B, 6B, 7B, 8B, 10B et 11B comportent également au moins un microcontrôleur, dont le détail est décrit ci-après en référence à la figure 7, chargé notamment de l'émission et de la réception de données par le biais du réseau CPL, de la mise en œuvre du procédé de synchronisation entre deux stations décrit ci-après en référence aux figures 3 à 5 et/ou du procédé de synchronisation du réseau CPL décrit ci-après en référence à la figure 6.

Pour que les opérations de mesure ou d'adaptation de charge réalisées par les stations soient effectuées sans erreurs, ces stations doivent être correctement synchronisées entre elles.

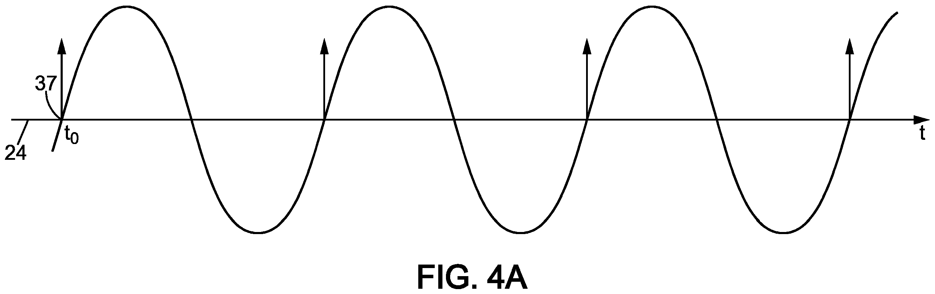

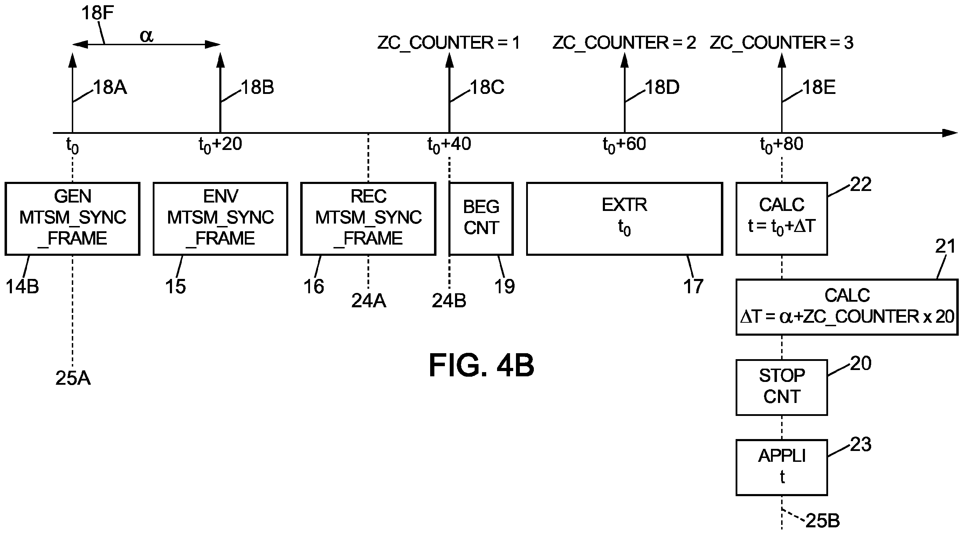

Pour ce faire, un procédé de synchronisation, selon un mode de réalisation de l'invention, est mis en œuvre entre deux stations. Comme cela est détaillé ci-après en référence à la figure 6, un signal d'horloge de référence, par exemple fourni par un serveur NTP, peut-être transmis à une première station puis diffusé, de proche en proche, à toutes les stations du réseau en appliquant le procédé de synchronisation décrit ci-après, notamment en référence aux **figures 4A et 4B.**

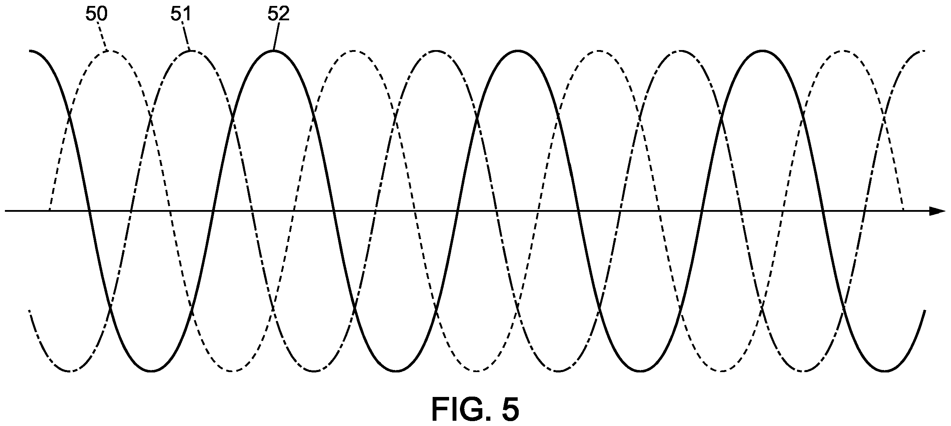

Le procédé selon le présent mode de réalisation est décrit ci-après, en référence aux figures 4, 4A et 4B, dans son application, non limitative, à un courant alternatif ne comportant qu'un unique signal alternatif périodique de période 20 ms, représenté à la figure 4A. En pratique, le courant alternatif est susceptible de comprendre une pluralité de signaux alternatifs périodiques déphasés entre eux. Cette situation est détaillée ci-après en référence à la figure 5.

Sur la figure 3, l'axe vertical en pointillé sépare les étapes qui sont effectuées par une station maitre, DOMIN, et les étapes effectuées par une station esclave, SERV. On rappelle que la station maitre dispose d'un signal d'horloge exact à partir duquel on cherche à synchroniser le signal d'horloge de la station esclave. Typiquement, le signal d'horloge de la station esclave est inexact avant la mise en œuvre du procédé de synchronisation.

Les aspects temporels du présent procédé sont très importants car la synchronisation repose sur la détermination d'une valeur d'horloge (une valeur de temps, par exemple 14h25min24s) à un instant qui est identifié par le signal alternatif. Pour illustrer ces aspects temporels, la figure 4B représente un chronogramme du procédé où les flèches montantes 18A, 18B, 18C, 18D et 18E correspondent aux moments où le signal alternatif est nul et croissant (comme sur la figure 4A). Ces instants correspondent à des coups d'horloge au niveau de la station maître et de la station esclave. Les étapes de la figure 3 sont également représentées sur la figure 4B afin de pouvoir les situer dans le temps.

A une étape 12, le procédé de synchronisation est déclenché. Comme cela est détaillé ci-après en référence à la figure 6, ce procédé peut être déclenché périodiquement, par exemple tous les soirs à minuit, où ponctuellement, à l'initiative d'un opérateur du centre de supervision 3 par exemple.

Le procédé de synchronisation débute, à l'étape 14A, en attendant un premier moment où le signal alternatif unique est nul et croissant, comme cela est représenté à la référence 37 de la figure 4A ou par la ligne pointillée 25A de la figure 4B. Pour détecter que le signal alternatif est nul et croissant, un procédé de « zero-crossing », pour croisement de zéro, est mis en œuvre.

Une valeur de temps $t_0$ correspondant à ce premier moment est alors donnée par le signal d'horloge de la station maitre à l'étape 13. Ce premier moment est représenté par la flèche 18A et la ligne pointillée 25A sur la figure 4B.

A l'étape 14B, une trame de synchronisation MTSM_SYNC_FRAME est générée. Cette trame comporte la valeur de temps $t_0$.

A l'étape 15, la trame de synchronisation MTSM_SYNC_FRAME est envoyée à destination de la station esclave via le réseau CPL. Au niveau temporel, le procédé prend en considération le temps requis pour générer la trame et préparer son émission sur le réseau CPL. Sur la figure 3, ce temps est symbolisé par l'horloge T1. Sur la figure 4B, il correspond à la durée α représentée par la double-flèche 18F.

Cette durée α peut-être fixe, typiquement fixée à 20 ms, ou variable. Dans le cas où elle est variable, elle correspond à la durée requise pour que la trame MTSM_SYNC_FRAME soit envoyée à un instant pertinent. Comme cela est expliqué ci-après au niveau de l'explication de la variable ZC_COUNTER à l'étape 21, il est préférable que la trame MTSM_SYNC_FRAME soit envoyée juste après un coup d'horloge (signal alternatif soit nul et croissant) pour que la durée de transmission de MTSM_SYNC_FRAME soit bien inférieure à une période du signal alternatif (20 ms ici).

A l'étape 16, la trame de synchronisation MTSM_SYNC_FRAME commence à être reçue pour être traitée à l'étape 17 afin que $t_0$ soit extrait de la trame reçue. Sur la figure 3, le temps pris par la transmission de la trame est représenté par l'horloge T2. Sur la figure 4B, on a représenté l'instant où la trame est reçue par la ligne pointillée 24A. En pratique, le délai de propagation de la trame est négligeable (de l'ordre de quelques dizaines de micros secondes) et la ligne pointillée devrait se trouver plus proche de la flèche 18B.

On détecte que la trame de synchronisation MTSM_SYNC_FRAME commence à être reçue dès que le préambule de cette trame est identifié au niveau de la station esclave. On entend par « préambule de la trame MTSM_SYNC_FRAME », les premiers bits de la trame à partir desquels la station esclave peut déterminer qu'il s'agit d'une trame de synchronisation. Un tel préambule est également appelé « header », pour tête, de la trame ou encore « préambule de synchronisation ».

En parallèle, dès que le préambule de la trame MTSM_SYNC_FRAME est détecté, un compteur est réveillé pour commencer à être incrémenté lors du prochain instant où le signal alternatif est nul et croissant (flèche 18C et ligne pointillée 24B sur la figure 4B). En effet, lorsque le signal alternatif est nul et croissant pour la première fois après que le préambule de la trame MTSM_SYNC_FRAME ait été détecté, la variable de comptage ZC_COUNTER passe à un comme cela est représenté en référence à l'étape 19 sur la figure 4B.

La variable de comptage ZC_COUNTER a donc pour rôle de compter le nombre de périodes qui s'écoulent depuis le début (détection du préambule) de la réception de la trame de synchronisation MTSM_SYNC_FRAME.

L'étape 17 de réception et de traitement de la trame MTSM_SYNC_FRAME pour extraire $t_0$ peut être relativement longue, comme cela est illustré par l'horloge T3 sur la figure 3 et par la longueur importante de la boite 17 sur la figure 4B. Parallèlement à ce traitement, le compteur continue de compter le nombre de périodes qui s'écoulent. Par exemple, sur la figure 4B, presque deux périodes de 20 ms s'écoulent entre le début de la réception de la trame MTSM_SYNC_FRAME et la fin de son traitement.

Une fois la valeur $t_0$ correctement extraite de la trame MTSM_SYNC_FRAME, des étapes 20, 21, 22 et 23 sont effectuées quasi-simultanément à un deuxième moment, identifié par la flèche 18E et la ligne pointillée 25B et correspondant à un instant où le signal alternatif est nul et croissant. On dit que ces étapes sont effectuées quasi-simultanément car le temps pris pour effectuer chacune de ces opérations est négligeable devant la précision souhaitée pour le signal d'horloge. Les étapes sont effectuées dans l'ordre suivant :

- à l'étape 20, le compteur ZC_COUNTER est arrêté. Le deuxième moment 25B correspondant un instant où le signal alternatif est nul et croissant, le compteur doit s'incrémenter précisément à ce deuxième moment ce qui pose un problème (impossible d'incrémenter et d'arrêter le compteur en même temps). Pour régler ce problème, on effectue les étapes 20, 21, 22 et 23 à un instant très court (de l'ordre de quelques fractions de micros secondes) après le deuxième moment 25B afin que le compteur soit bien incrémenté avant d'être arrêté.

- A l'étape 21, la durée ΔT écoulée depuis la génération de la trame MTSM_SYNC_FRAME au niveau de la station maitre à l'étape 14A est calculée. Dans l'exemple ici donné en référence à la figure 4B, ΔT=80ms. Le calcul suivant est effectué au niveau de la station esclave :

$$\Delta T = \propto + ZC\_COUNTER \times 20,$$

avec :

○ α correspondant à la durée écoulée entre la génération de la trame et son envoi effectif (représenté par la flèche 18F sur la figure 4B). Quand α est fixe, la valeur n'a pas à être transmise dans la trame MTSM_SYNC_FRAME. Par contre, quand α est variable, sa valeur est comprise dans la trame MTSM_SYNC_FRAME. Pour ce faire, la trame peut comprendre la valeur de $t_0$ et de α ou directement la valeur de $t_0$+α. Dans le cas où seule la valeur de $t_0$+α est transmise, le calcul de ΔT ne comporte pas le terme α, il correspond donc à ΔT = ZC_COUNTER × 20, mais le calcul de t, à l'étape 22, est modifié pour prendre en compte directement $t_0$+α comme expliqué ci-après en référence à l'étape 22. ; ○ ZC_COUNTER correspondant au nombre de périodes comptées par le compteur entre le moment 24A où la trame de synchronisation a commencé à être reçue au niveau de la station esclave (détection du préambule de MTSM_SYNC_FRAME) et le deuxième moment 25B. On fait ici l'hypothèse que la durée de transmission de la trame MTSM_SYNC_FRAME est inférieure à la durée d'une période, ici 20 ms. Cette hypothèse implique donc que ZC_COUNTER corresponde au nombre de périodes écoulées entre l'envoi de la trame MTSM_SYNC_FRAME depuis la station maitre au moment 18B et le deuxième moment 25B. En pratique, cette hypothèse se justifie par la vitesse de transmission de la trame, qui est proche de la vitesse de la lumière. Cette vitesse étant très élevée, le temps de transmission de la trame est négligeable devant la durée d'une période du signal alternatif. En outre, pour s'assurer de la validité de cette hypothèse, on fait en sorte de s'assurer que MTSM_SYNC_FRAME soit envoyée juste après un coup d'horloge, comme mentionné ci-avant ; et ○ 20, correspondant à la durée d'une période (ici 20 ms);

-    A l'étape 22, la valeur d'horloge t est calculée par la station esclave en additionnant $t_0$ avec ΔT. Ce calcul donne à la station esclave la valeur d'horloge exacte (directement déduite de la référence temporelle commune $t_0$ donnée par l'horloge de référence de la station maitre) correspondant au deuxième moment 25B. Ceci est rendu possible par la possibilité de déterminer (par le calcul de ΔT) de manière certaine la durée écoulée entre la génération de la trame MTSM_SYNC_FRAME, au premier moment 25A, et un deuxième moment 25B identifié par la station esclave au moyen du signal alternatif. Dans la situation où $t_0$+α est transmis dans la trame MTSM_SYNC_FRAME, la valeur d'horloge t est calculée en additionnant $t_0$+α, avec ΔT.

-    A l'étape 23, cette valeur t est alors utilisée pour mettre à jour le signal d'horloge de la station esclave. Le signal d'horloge de la station esclave est alors bien synchronisé avec le signal d'horloge de la station maitre.

En pratique, le courant alternatif est constitué de plusieurs signaux périodiques déphasés entre eux comme cela est représenté à la **figure 5**. Ainsi, les signaux 50, 51 et 52 de la figure 5 sont périodiques de période 20 ms avec un déphasage de 6.66 ms du signal 52 par rapport au signal 51 et du signal 50 par rapport au signal 52.

Pour des raisons de clarté de la figure 5, seuls trois signaux ont été représenté mais il est également possible de prévoir, par exemple, trois autres signaux correspondants aux cas d'inversion phase-neutre sur un réseau de distribution d'électricité basse tension. Dans cette situation, les signaux de période 20 ms sont déphasés de 3.33 ms.

Cette multiplicité de signaux périodiques dans le courant alternatif rend plus complexe la mise en œuvre du procédé de synchronisation décrite ci-avant en référence aux figures 3, 4A et 4B car la station maitre et la station esclave doivent travailler sur le même signal afin d'avoir une référence de signal commune.

En pratique, pour des raisons liées à la gestion du réseau de distribution d'électricité, chaque station est rattachée à un des signaux 50, 51 ou 52 du courant alternatif. Il faut donc que chaque station connaisse et puisse indiquer à quel signal elle est rattachée. Pour ce faire, une information, appelée information de déphasage, indique le déphasage entre le signal auquel est rattaché une première station et chacun des signaux auxquels sont respectivement rattachées les stations voisines de cette première station.

Dans la norme CPL G3, cette information de déphasage est donnée par la variable PhaseDifferential. Elle est stockée au niveau de chaque station dans une table des voisins qui répertorie une information de déphasage pour chaque voisin. La durée de vie d'une entrée dans cette table des voisins est définie par l'attribut *mac_neighbour_table_entry_TTL.*

En particulier, le signal d'horloge de chaque station est lié à un seul des trois signaux. Ceci implique que le signal choisi pour déterminer la référence temporelle commune $t_0$ au niveau de la station maitre est le signal auquel est rattaché la station maitre. Ceci implique également que la station esclave peut déterminer le signal utilisé par la station maitre pour déterminer la référence temporelle commune en utilisant l'information de déphasage qu'elle a stocké dans sa table des voisins pour la station maitre.

Ainsi, pour mettre en œuvre le procédé de synchronisation précédemment décrit en référence aux figures 3, 4A et 4B dans le cas où le courant alternatif présente plusieurs signaux périodiques déphasés 50, 51 et 52, la station esclave doit déterminer à quel signal est rattaché la station maitre (ce signal étant celui utilisé pour déterminer la référence temporelle commune $t_0$).

La détermination de ce signal s'effectue entre l'étape d'extraction de $t_0$ de la trame MTSM_SYNC_FRAME et le deuxième moment 25B où les étapes 20, 21, 22 et 23 sont quasi-simultanément mises en œuvre. En effet, pour que l'information de déphasage puisse être déduite de la table des voisins, il est nécessaire de connaitre l'adresse de la station maitre qui est contenue dans la trame MTSM_SYNC_FRAME. Une fois le signal identifié par la station esclave, le procédé décrit ci-avant en référence aux figures 3, 4A et 4B, et en particulier les étapes 20 à 23, est appliqué en prenant pour unique signal alternatif le signal identifié.

Des variantes du procédé de synchronisation décrit ci-avant en référence aux figures 3 à 5 consistent par exemple à choisir des valeurs différentes pour la référence temporelle commune (par exemple en fixant $t_0$ sur le deuxième moment 25B), à effectuer les étapes au deuxième moment 25B dans un ordre différent ou encore à prendre en compte une information relative au temps de transmission de la trame de synchronisation.

Dans un réseau CPL, l'atténuation causée par le canal de communication ne permet pas à une station de communiquer directement avec l'ensemble des stations du réseau : d'une manière générale, l'émission d'une seule trame de synchronisation ne sera généralement pas suffisante pour synchroniser toutes les stations du réseau. En conséquence, le procédé de synchronisation décrit ci-avant peut être appliqué aux stations de manière itérative, de proche en proche, comme cela est décrit ci-après en référence à la **figure 6.**

Ce procédé de synchronisation du réseau CPL décrit ci-après en référence à la figure 6, met avantageusement en œuvre le procédé décrit ci-avant mais peut également être mis en œuvre par un autre procédé de synchronisation entre deux stations, comme celui décrit dans la norme IEC 61588 décrite ci-avant, par exemple. Techniquement, ce procédé de synchronisation du réseau CPL décrit ci-après en référence à la figure 6 n'est pas lié au procédé de synchronisation entre deux stations décrit ci-avant en référence aux figures 3 à 5 et peut donc être mis en œuvre de manière indépendante. Ainsi, on se réfère ci-après à un « procédé de synchronisation » qui fait référence au procédé de synchronisation entre deux stations décrit ci-avant en référence aux figures 3 à 5 ou à tout autre procédé de synchronisation entre deux stations.

La ou les trames utilisées pour la mise en œuvre du procédé de synchronisation peut être envoyé selon deux modes de transmission.

Le premier mode est un mode « broadcast », pour diffusion générale en français. Ce mode broadcast correspond à une diffusion de la ou des trames de synchronisation à toutes les stations d'un réseau CPL. Dans un mode de réalisation particulier, le mode de diffusion est un mode broadcast local dans lequel la ou les trames de synchronisation sont diffusées à toutes les stations d'un sous-réseau CPL, sans que cette ou ces trames soient routées dans ce sous-réseau CPL.

La première station 26 à être synchronisée est appelée ATS, pour « Absolute Time Server » soit serveur de temps absolu en français. L'ATS 26 est synchronisé par un moyen externe de référence tel qu'un serveur de type Network Time Protocol, NTP. Le procédé de synchronisation du réseau ici décrit en référence à la figure 6 est fondé sur la promotion itérative des stations du réseau en stations capable de synchroniser d'autres stations.

On appelle ATPS, pour « Absolute Time Proxy Server » soit serveur proxy de temps absolu en français, une station synchronisée par le procédé de synchronisation et à partir de laquelle d'autres stations sont synchronisées par le procédé de synchronisation. Ce titre d'ATPS confère donc à la station ainsi promue le droit de mettre en œuvre le procédé de synchronisation de la même manière que l'ATS afin de synchroniser les stations hors de portée de l'ATS. En particulier, dans le cas où le procédé de synchronisation a été sollicité en mode broadcast, l'ATPS poursuit automatiquement la procédure de mise à l'heure du réseau en mettant en œuvre au plus tôt le procédé de synchronisation pour synchroniser d'autres stations.

Ainsi, sur la figure 6, l'ATS 26 est d'abord synchronisée par un moyen externe de référence tel qu'un serveur NTP. Les stations 27 et 29, qui sont voisines de l'ATS 26 sont alors synchronisées par le procédé de synchronisation. Elles sont donc promues ATPS et peuvent à leur tour être utilisées pour synchroniser les stations 28 et 30. Le procédé de synchronisation est ainsi diffusé de proche en proche sur le réseau CPL.

Le deuxième mode est un mode « unicast », pour envoi individuel en français. Le mode unicast correspond à une connexion réseau point à point, c'est-à-dire d'un hôte vers un seul autre hôte. Ici, la connexion point à point peut comporter des stations intermédiaires sur le chemin de la ou des trames de synchronisation. En effet, comme mentionné ci-avant, le procédé de synchronisation est mis en œuvre de proche en proche. Ce mode particulier est utilisé pour mettre à l'heure une station particulière du réseau.

Une station dans un état « non synchronisée » peut solliciter les ATS et/ou ATPS à portée pour être mise à l'heure. Pour réaliser cette synchronisation à la demande, la station émet une trame MTSM_SYNC_REQ_FRAME qui a pour effet de déclencher la mise en œuvre du procédé de synchronisation en mode unicast par toutes les stations ATS ou ATPS ayant reçu la trame. Dans ce mode, l'adresse de destination de la ou des trame de synchronisation est l'adresse de la station ayant envoyée la trame MTSM_SYNC_REQ_FRAME. On appelle « mode on-demand » ci-après.

On décrit maintenant, toujours en référence à la figure 6, le détail d'un procédé de synchronisation du réseau CPL selon un mode de réalisation particulier. Ce mode de réalisation particulier est ici décrit lorsqu'il utilise le procédé de synchronisation décrit ci-avant en référence aux figures 3 à 5. Ce mode de réalisation peut toutefois être également mis en œuvre par un autre procédé de synchronisation. L'homme du métier peut directement adapter la description ci-dessous à un autre procédé de synchronisation en remplaçant notamment la trame MTSM_SYNC_FRAME par la ou les trames utilisées pour la synchronisation dans les autres procédés de synchronisation.

En particulier, les variables suivantes sont utilisées pour l'administration du procédé de synchronisation du réseau CPL.

Au niveau de l'ATS uniquement :

- *mtsm_node_status* : statut de la station vis-à-vis du procédé de synchronisation du réseau CPL. Indique si la station est ATS, ATPS ou n'est pas encore synchronisée.

  ◦ Valeurs possibles : {« MTSM_ATS », « MTSM_CLIENT », « MTSM_ATPS »}
  ◦ Valeur par défaut : « MTSM_ATS »

- *mtsm_network_sync_period* : périodicité de l'envoi des trames de synchronisation sur le réseau en mode broadcast.

  ◦ Valeurs possibles : entier positif
  ◦ Valeur par défaut : définie par l'utilisateur

- *mtsm_network_sync_id* : identifiant unique d'une procédure de synchronisation du réseau CPL. Ainsi, à chaque fois que l'ATS lance la synchronisation de ses voisins, et donc par extension de tout le réseau CPL, la variable *mtsm_network_sync_id* est incrémentée. La variable *mtsm_network_sync_id* est donc une variable de comptage. La valeur courante de cette variable est envoyée dans un champ spécial de la trame MTSM_SYNC_FRAME.

Au niveau de toutes les stations ATPS ou des stations à synchroniser dans le réseau CPL :

- *mtsm_node_status* : statut de la station vis-à-vis du procédé de synchronisation du réseau CPL. Elle est similaire à la variable décrite ci-avant pour l'ATS.

  ◦ Valeurs possibles : {« MTSM_ATS », « MTSM_CLIENT », « MTSM_ATPS »}
  ◦ Valeur par défaut : « MTSM_CLIENT »

- *mtsm_on_demand_sync* : Activation/désactivation du mode on-demand.

  ◦ Valeurs possibles : {« TRUE », « FALSE »}
  ◦ Valeur par défaut : « FALSE »

- *mtsm_on_demand_sync_period* : délai entre deux demandes de synchronisation en mode on-demand.

  ◦ Valeurs possibles : entier positif
  ◦ Valeur par défaut : défini par l'utilisateur

- *mtsm_sync_timeout* : durée au bout de laquelle une station nouvellement synchronisée passe de l'état « MTSM_ATPS » à « MTSM_CLIENT ».

  ◦ Valeurs possibles : entier positif
  ◦ Valeur par défaut : définie par l'utilisateur (doit être logiquement supérieure à *mtsm_network_sync_period*)

- *mtsm_max_retry* : nombre maximal de tentatives d'envoi d'une trame MTSM_SYNC_FRAME en mode broadcast lors de la procédure de synchronisation du réseau CPL initiée par l'ATS.

  ◦ Valeurs possibles : entier positif
  ◦ Valeur par défaut : définie par l'utilisateur

- *mtsm_last_network_sync_id* : dernière valeur connue du paramètre *mtsm_network_sync_id* (transportée dans la trame MTSM_SYNC_FRAME lorsque celle-ci est envoyée en mode Broadcast). Comme cela est expliqué ci-après, la valeur prise par cette variable *mtsm_last_network_sync_id* est stockée au niveau de chaque station et permet d'éviter de synchroniser plusieurs fois les mêmes stations dans une même procédure de synchronisation du réseau CPL initiée par l'ATS (par exemple la station 28 qui resynchroniserait la station 27 après avoir elle-même été synchronisée par la station 27).

  ◦ Valeurs possibles : entier positif
  ◦ Valeur par défaut : NA

On considère pour ce mode de réalisation particulier que le délai entre l'envoi de la trame MTSM_SYNC_FRAME et la synchronisation effective du signal d'horloge de la station esclave est de 1 s. En outre, on considère que le paramètre *mtsm_last_network_sync_id* est à 0 dans toutes les stations du réseau.

Dans ce mode de réalisation particulier, le procédé de synchronisation du réseau CPL est paramétré comme suit :

- La synchronisation du réseau est réalisée une fois par jour, à minuit
- *mtsm_network_sync_period* = 24 heures ;
- *mtsm_sync_timeout* = 25 heures ;
- *mtsm_on_demand_sync_period* = 5 minutes ;

Pour les autres paramètres introduits ci-avant, les valeurs par défaut sont utilisées.

Phase 1 : cas où la synchronisation du réseau CPL est effectuée avec succès

1) $t_1$ : il est minuit, l'ATS 26 initie la procédure de synchronisation des stations du réseau CPL.

2) $t_1 + \varepsilon_1$ : l'ATS 26 envoie une trame de synchronisation MTSM_SYNC_FRAME en mode broadcast juste après le premier moment 25A. La valeur du champ *mtsm_network_sync_id* est égale à 1 dans la trame MTSM_SYNC_FRAME envoyée.

3) $t_1 + \varepsilon_0 + 1s$: les stations 27 et 29 sont synchronisées (elles se sont synchronisées car *mtsm_network_sync_id* > *mtsm_last_network_sync_id*). Elles sont promues ATPS, statut qu'elles conserveront toutes deux durant les 25 prochaines heures. Le paramètre *mtsm_last_network_sync_id* passe à 1 dans les deux stations.

4) $t_1 + \varepsilon_0 + \varepsilon_1 + 1s$ : Le procédé de synchronisation du réseau CPL ayant été déclenché par l'ATS en mode broadcast, la station 27 envoie une trame de synchronisation MTSM_SYNC_FRAME en mode broadcast. La valeur du champ *mtsm_network_sync_id* est égale à 1 dans la trame envoyée.

5) $t_1 + \varepsilon_0 + \varepsilon_2 + 1s$ : Le procédé de synchronisation du réseau CPL ayant été déclenché par l'ATS en mode broadcast, la station 29 envoie une trame de synchronisation MTSM_SYNC_FRAME en mode broadcast. La valeur du champ *mtsm_network_sync_id* est égale à 1 dans la trame envoyée.

6) $t_1 + \varepsilon_0 + \varepsilon_1 + 2s$ : la station 28 est synchronisée (elle se met à l'heure car *mtsm_network_sync_id* > *mtsm_last_network_sync_id*). Elle est promue ATPS, statut qu'elle conservera durant les 25 prochaines heures. Son paramètre *mtsm_last_network_sync_id* passe à 1.

7) $t_1 + \varepsilon_0 + \varepsilon_2 + 2s$ : la station 30 est synchronisée (elle se met à l'heure car *mtsm_network_sync_id* > *mtsm_last_network_sync_id*). Elle est promue ATPS, statut qu'elle conservera durant les 25 prochaines heures. Son paramètre *mtsm_last_network_sync_id* passe à 1.
A leurs tours, les stations 28 et 30 émettent une trame de synchronisation. Cette trame n'a aucun effet sur les autres stations du réseau car *mtsm_last_network_sync_id* est à 1 dans toutes les stations du réseau. Les caractères ε correspondent au temps requis pour générer la trame MTSM_SYNC_FRAME.

8) $t_1 + 6h$ : la première synchronisation du réseau CPL ayant été réalisée. On fait l'hypothèse que le système applique un nouveau paramétrage sur le réseau CPL, en passant le paramètre *mtsm_on_demand_sync* à la valeur « **TRUE** » dans tous les équipements clients.

Phase 2 : cas où la synchronisation du réseau CPL est partiellement réussie

9) $t_2 = t_1 + 24h$ : il est minuit, l'ATS 26 initie la procédure de synchronisation du réseau CPL, en utilisant un nouvel identifiant unique *mtsm_network_sync_id*, qui passe à la valeur 2. Les étapes 2 à 6 décrites dans la phase 1 se déroulent normalement. En revanche, à l'étape 7, on fait l'hypothèse que la synchronisation de la station 30 est en échec (raisons possibles : trame MTSM_SYNC_FRAME non décodée par la station, information de déphasage non disponible dans la table des voisins...).

10) $t_2 = t_1 + 25h$ : le délai *mtsm_sync_timeout* est écoulé pour la station 30 : elle passe de l'état « MTSM_ATPS » à l'état « MTSM_CLIENT ».

11) $t_2 + \varepsilon_4$ : le service de mise à l'heure à la demande ayant été activé par le système, la station 30 envoie une trame MTSM_SYNC_REQ_FRAME en broadcast local. Cette trame est reçue par la station 29.

12) $t_2 + \varepsilon_4 + \varepsilon_5$ : la station 29 envoie une trame de synchronisation MTSM_SYNC_FRAME en mode unicast, l'adresse de destination de la trame étant l'adresse de la station 30.

Tant que la synchronisation de la station 30 est en échec, les étapes 11 et 12 sont répétées toutes les 5 minutes (période fixée par *mtsm_on_demand_sync_period*).

Le détail du microcontrôleur compris dans les stations 5B, 6B, 7B, 8B, 10B, 11B et 26 à 30, notamment, à partir duquel les étapes sont mise en œuvre les étapes du procédé de synchronisation entre deux stations décrit en référence aux figures 3 à 5 et les étapes du procédé de synchronisation du réseau CPL décrit en référence à la figure 6 est ici décrit en référence à la **figure 7.**

Ce microcontrôleur 55 peut prendre la forme d'un boitier comprenant des circuits imprimé, de tout type d'ordinateur ou encore d'un téléphone mobile.

Le microcontrôleur 55 comprend une mémoire vive 34 pour stocker des instructions pour la mise en œuvre par un processeur 33 des étapes du procédé de synchronisation entre deux stations décrit en référence aux figures 3 à 5 et des étapes du procédé de synchronisation du réseau CPL décrit en référence à la figure 6, notamment. Le dispositif comporte aussi une mémoire de masse 35 pour le stockage de données destinées à être conservées après la mise en œuvre du procédé.

Le microcontrôleur 55 peut en outre comporter un processeur de signal numérique (DSP) 32. Ce DSP 32 reçoit les données de déperdition pour mettre en forme, démoduler et amplifier, de façon connue en soi ces données.

Le microcontrôleur 55 comporte également une interface d'entrée 31 pour la réception de paramètres pour la mise en œuvre du procédé de synchronisation entre deux stations décrit en référence aux figures 3 à 5 ou du procédé de synchronisation du réseau CPL décrit en référence à la figure 6 ou de la trame de synchronisation MTSM_SYNC_FRAME et une interface de sortie 36 notamment pour la transmission de la trame de synchronisation MTSM_SYNC_FRAME.

La présente invention ne se limite pas aux formes de réalisation décrites ci-avant à titre d'exemples ; elle s'étend à d'autres variantes.

Ainsi, on a décrit ci-avant un mode de réalisation dans lequel la synchronisation était effectuée entre des stations d'un réseau CPL. Bien sûr, cette synchronisation peut être effectuée entre n'importe quel type de matériel connecté à un réseau CPL.

## Revendications

1. Procédé de synchronisation d'un signal d'horloge d'une station esclave avec un signal d'horloge d'une station maitre, le signal d'horloge de la station maitre étant donné par un moyen externe de référence, les deux stations étant reliées par un réseau de Courant Porteur en Ligne, CPL, comportant les étapes de :

   - détermination d'une référence temporelle commune aux deux stations à partir d'un courant alternatif dudit réseau CPL ;
   - mise à jour (23) du signal d'horloge de la station esclave par application d'une valeur d'horloge déterminée à partir de la référence temporelle commune,

   la référence temporelle commune étant transmise de la station maître à destination de la station esclave via le réseau CPL.

2. Procédé selon la revendication 1, dans lequel la référence temporelle commune est une valeur de temps donnée par le signal d'horloge de la station maitre, la valeur de temps correspondant à un premier moment (25A) où le courant alternatif atteint une valeur particulière.

3. Procédé selon la revendication 2, dans lequel la valeur particulière est atteinte quand le courant alternatif est nul et croissant (37).

4. Procédé selon l'une des revendications 2 et 3, comportant en outre les étapes de :

   - génération (14B) par la station maitre d'une trame de synchronisation comportant la référence temporelle commune ;
   - transmission (15) de la trame de synchronisation de la station maitre vers la station esclave ;
   - extraction (17) par la station esclave de la référence temporelle commune à partir de la trame de synchronisation ;
   - à un deuxième moment (25B) où le courant alternatif atteint la valeur particulière, le deuxième moment étant postérieur à l'extraction, au niveau de la station esclave :

     • détermination (21) du nombre de périodes écoulées entre le premier moment (25A) et le deuxième moment (25B) ;
     • calcul (22) de la valeur d'horloge par addition de la référence temporelle commune avec la durée correspondant au nombre de périodes écoulées ;
     • mise à jour (23) du signal d'horloge de la station esclave par application de la valeur d'horloge au signal d'horloge de la station esclave audit deuxième moment.

5. Procédé selon la revendication 1, dans lequel le courant alternatif dudit réseau CPL comporte une pluralité de signaux périodiques, ces signaux étant déphasés les uns par rapport aux autres ; et
   dans lequel la référence temporelle commune est une valeur de temps correspondant à un premier moment où un signal donné parmi ladite pluralité de signaux atteint une valeur particulière ;
   le procédé comportant en outre les étapes de :

   - génération (14B) par la station maitre d'une trame de synchronisation comportant ladite référence temporelle commune ;
   - transmission (15) de la trame de synchronisation de la station maitre vers la station esclave ;
   - extraction (17) par la station esclave de la référence temporelle commune à partir de la trame de synchronisation ;
   - détermination du signal donné parmi ladite pluralité de signaux à partir d'une information de déphasage des signaux périodiques entre la station maitre et la station esclave ;
   - à un deuxième moment (25B) où le signal donné atteint ladite valeur particulière, le deuxième moment étant postérieur à ladite détermination du signal donné, au niveau de la station esclave :

- détermination (21) du nombre de périodes écoulées entre le premier moment et le deuxième moment ;
- calcul (22) de la valeur d'horloge par addition de la référence temporelle commune avec la durée correspondant au nombre de périodes écoulées ;
- mise à jour (23) du signal d'horloge de la station esclave par application de la valeur d'horloge au signal d'horloge de la station esclave audit deuxième moment.

6. Procédé selon la revendication 5, dans lequel le réseau CPL répond à la norme ITU-T G.9903, et dans lequel l'information de déphasage est stockée au niveau de la station esclave et est donnée par la variable PhaseDifferential.

7. Procédé selon l'une des revendications précédentes, dans lequel le moyen externe de référence est un serveur de type Network Time Protocol, NTP.

8. Procédé de synchronisation des stations d'un réseau Courant Porteur en Ligne, CPL, le réseau comportant une station maitre (26) et un ensemble (27, 28, 29, 30) comportant au moins deux stations esclaves,
le procédé comportant :

- une première étape de mise en œuvre du procédé de synchronisation au sens de l'une des revendications précédentes entre la station maitre (26) et une première pluralité de stations esclaves (27, 29) dudit ensemble qui sont voisines directes de la station maitre sur ledit réseau CPL;
- une deuxième étape de mise en œuvre du procédé de synchronisation au sens de l'une des revendications précédentes entre la première pluralité de stations esclaves (27, 29) synchronisées lors de ladite première étape et une deuxième pluralité de stations esclaves (28, 30) dudit ensemble qui sont voisines directes d'au moins une station esclave de ladite première pluralité,

et dans lequel la deuxième étape est répétée jusqu'à ce que toutes les stations esclaves dudit ensemble aient été synchronisées.

9. Procédé selon la revendication 8, dans lequel la première étape comporte en outre l'incrémentation d'une variable de comptage au niveau des stations esclaves de ladite première pluralité, et dans lequel, lors de la deuxième étape et des étapes ultérieures correspondantes auxdites répétitions de la deuxième étape, seules les stations esclaves de ladite deuxième pluralité pour lesquelles la variable de comptage est strictement inférieure à la variable de comptage des stations esclaves de ladite première pluralité sont synchronisées.

10. Programme informatique comportant des instructions pour la mise en œuvre de toutes les étapes du procédé selon l'une quelconque des revendications précédentes, lorsque ces instructions sont exécutées par un processeur (33).

11. Station esclave reliée à un réseau de Courant Porteur en Ligne, CPL, comportant un signal d'horloge, la station esclave étant reliée à une station maitre par ledit réseau CPL, ladite station esclave comportant :

- des moyens de réception d'une référence temporelle commune aux deux stations à partir d'un courant alternatif dudit réseau CPL ; la référence temporelle commune étant reçue depuis le réseau CPL,
- un processeur (33) agencé pour effectuer les opérations de :

- calcul d'une valeur d'horloge à partir de ladite référence temporelle commune ;
- mise à jour du signal d'horloge par application de la valeur d'horloge audit signal d'horloge.

12. Station maitre reliée à un réseau de Courant Porteur en Ligne, CPL, comportant un signal d'horloge, la station maitre étant reliée à une station esclave par ledit réseau CPL, ladite station maitre comportant :

- des moyens de communication avec un moyen externe de référence à partir duquel est déduit le signal d'horloge ;
- un processeur (33) agencé pour effectuer une opération de détermination d'une référence temporelle commune aux deux stations à partir d'un courant alternatif dudit réseau CPL ;
- des moyens d'envoi de ladite référence temporelle commune via le réseau CPL.

13. Réseau de Courant Porteur en Ligne, CPL, le réseau comportant une station maitre et un ensemble comportant au moins deux stations esclaves, la station maitre et l'ensemble de stations esclaves comportant un processeur agencé pour la mise en œuvre du procédé selon la revendication 8.

**Patentansprüche**

1. Verfahren zum Synchronisieren eines Taktsignals einer Slave-Station mit einem Taktsignal einer Master-Station, wobei das Taktsignal der Master-Station durch ein externes Referenzmittel gegeben ist, wobei die beiden Stationen durch ein Power Line Communication (PLC)-Netz verbunden sind, umfassend die folgenden Schritte:

- Bestimmung einer gemeinsamen Zeitreferenz für die beiden Stationen aus einem Wechselstrom des genannten PLC-Netzes;
- Aktualisierung (23) des Taktsignals der Slave-Station durch Anwendung eines aus der gemeinsamen Zeitreferenz bestimmten Taktwertes,

wobei die gemeinsame Zeitreferenz von der Master-Station zur Slave-Station über das PLC-Netz übertragen wird.

2. Verfahren nach Anspruch 1, wobei die gemeinsame Zeitreferenz ein Zeitwert ist, der durch das Taktsignal der Master-Station gegeben wird, wobei der Zeitwert einem ersten Zeitpunkt (25A) entspricht, zu dem der Wechselstrom einen bestimmten Wert erreicht.

3. Verfahren nach Anspruch 2, wobei der bestimmte Wert erreicht wird, wenn der Wechselstrom Null ist und ansteigt (37).

4. Verfahren nach einem der Ansprüche 2 und 3, welches ferner die folgenden Schritte umfasst:

- Erzeugung (14B) eines Synchronisationsrahmens mit der gemeinsamen Zeitreferenz durch die Master-Station;
- Übertragung (15) des Synchronisationsrahmens von der Master-Station zur Slave-Station;
- Extraktion (17) der gemeinsamen Zeitreferenz aus dem Synchronisationsrahmen durch die Slave-Station;
- zu einem zweiten Zeitpunkt (25B), zu dem der Wechselstrom den bestimmten Wert erreicht, wobei der zweite Zeitpunkt auf die Extraktion folgt, an der Slave-Station:

• Bestimmung (21) der Anzahl der zwischen dem ersten Zeitpunkt (25A) und dem zweiten Zeitpunkt (25B) verstrichenen Zeitabschnitte;
• Berechnung (22) des Taktwertes durch Addition der gemeinsamen Zeitreferenz und der Dauer, die der Anzahl der verstrichenen Zeitabschnitte entspricht;
• Aktualisierung (23) des Taktsignals der Slave-Station durch Anwendung des Taktwertes auf das Taktsignal der Slave-Station zum zweiten Zeitpunkt.

5. Verfahren nach Anspruch 1, wobei der Wechselstrom des PLC-Netzes eine Vielzahl von periodischen Signalen umfasst, wobei diese Signale zueinander phasenverschoben sind; und
wobei die gemeinsame Zeitreferenz ein Zeitwert ist, der einem ersten Zeitpunkt entspricht, zu dem ein gegebenes Signal der Vielzahl von Signalen einen bestimmten Wert erreicht;
wobei das Verfahren ferner die folgenden Schritte umfasst:

- Erzeugen (14B) eines Synchronisationsrahmens mit der gemeinsamen Zeitreferenz durch die Master-Station;
- Übertragen (15) des Synchronisationsrahmens von der Master-Station zur Slave-Station;
- Extrahieren (17) der gemeinsamen Zeitreferenz aus dem Synchronisationsrahmen durch die Slave-Station;
- Bestimmen des gegebenen Signals unter der Vielzahl von Signalen aus der Phasenverschiebungsinformation der periodischen Signale zwischen der Master-Station und der Slave-Station;
- zu einem zweiten Zeitpunkt (25B), zu dem das gegebene Signal den bestimmten Wert erreicht, wobei der zweite Zeitpunkt nach der Bestimmung des gegebenen Signals an der Slave-Station liegt:

• Bestimmung (21) der Anzahl der zwischen dem ersten Zeitpunkt und dem zweiten Zeitpunkt verstrichenen Zeitabschnitte;
• Berechnung (22) des Taktwertes durch Addition der gemeinsamen Zeitreferenz und der Dauer, die der Anzahl der verstrichenen Zeitabschnitte entspricht;
• Aktualisierung (23) des Taktsignals der Slave-Station durch Anwendung des Taktwertes auf das Taktsignal der Slave-Station zum zweiten Zeitpunkt.

6. Verfahren nach Anspruch 5, wobei das PLC-Netzwerk dem ITU-T G.9903-Standard entspricht und wobei die Phasenverschiebungsinformation in der Slave-Station gespeichert und durch die Variable PhaseDifferential gegeben ist.

7. Verfahren nach einem der vorhergehenden Ansprüche, wobei das externe Referenzmittel ein Server vom Typ Network Time Protocol, NTP, ist.

8. Verfahren zum Synchronisieren der Stationen eines Power Line Communication (PLC)-Netzes, wobei das Netz eine Master-Station (26) und eine Anordnung (27, 28, 29, 30) mit mindestens zwei Slave-Stationen umfasst,
wobei das Verfahren folgende Schritte umfasst:

- einen ersten Schritt der Implementierung des Synchronisationsverfahrens im Sinne eines der vorhergehenden Ansprüche zwischen der Master-Station (26) und einer ersten Mehrzahl von Slave-Stationen (27, 29) der Anordnung, die direkte Nachbarn der Master-Station in dem PLC-Netz sind;
- einen zweiten Schritt der Implementierung des Synchronisationsverfahrens im Sinne eines der vorhergehenden Ansprüche zwischen der ersten Vielzahl von Slave-Stationen (27, 29), die in dem ersten Schritt synchronisiert wurden, und einer zweiten Vielzahl von Slave-Stationen (28, 30) der Anordnung, die direkte Nachbarn mindestens einer Slave-Station der ersten Vielzahl sind,

und wobei der zweite Schritt wiederholt wird, bis alle Slave-Stationen der Anordnung synchronisiert wurden.

9. Verfahren nach Anspruch 8, wobei der erste Schritt ferner das Inkrementieren einer Zählvariablen an den Slave-Stationen der ersten Vielzahl umfasst, und wobei in dem zweiten und den nachfolgenden Schritten entsprechend den Wiederholungen des zweiten Schritts nur diejenigen Slave-Stationen der zweiten Vielzahl synchronisiert werden, für die die Zählvariable grundsätzlich kleiner als die Zählvariable der Slave-Stationen der ersten Vielzahl ist.

10. Computerprogramm, welches Befehle zur Ausführung aller Schritte des Prozesses gemäß einem der vorhergehenden Ansprüche umfasst, wenn diese Befehle von einem Prozessor (33) ausgeführt werden.

11. Slave-Station, die an ein Powerline Communication (PLC)-Netz, angeschlossen ist, umfassend ein Taktsignal, wobei die Slave-Station durch das PLC-Netz mit einer Master-Station verbunden ist, wobei die Slave-Station umfasst:

　　- Mittel zum Empfangen einer beiden Stationen gemeinsamen Zeitreferenz von einem Wechselstrom des PLC-Netzes; wobei die gemeinsame Zeitreferenz von dem PLC-Netz empfangen wird,
　　- einen Prozessor (33), der so angeordnet ist, dass er folgende Operationen ausführt:

　　　　• Berechnung eines Taktwertes aus der gemeinsamen Zeitreferenz;
　　　　• Aktualisierung des Taktsignals durch Anwendung des Taktwertes auf das genannte Taktsignal.

12. Master-Station, die an ein Powerline Communication (PLC)-Netz angeschlossen ist, das ein Taktsignal enthält, wobei die Master-Station über das PLC-Netz mit einer Slave-Station verbunden ist, wobei die Master-Station folgendes umfasst:

　　- Mittel zur Kommunikation mit einem externen Referenzmittel, von dem das Taktsignal abgeleitet wird;
　　- einen Prozessor (33), der so angeordnet ist, dass er eine Operation zur Bestimmung einer gemeinsamen Zeitreferenz für die beiden Stationen aus einem Wechselstrom des PLC-Netzes durchführt;
　　- Mittel zum Senden der gemeinsamen Zeitreferenz über das PLC-Netz.

13. Powerline Communication (PLC)-Netz, wobei das Netz eine Master-Station und eine Anordnung mit mindestens zwei Slave-Stationen umfasst, wobei die Master-Station und die Anordnung der Slave-Stationen einen Prozessor umfassen, der zur Durchführung des Verfahrens nach Anspruch 8 angeordnet ist.

## Claims

1. A method for synchronising a clock signal of a slave station with a clock signal of a master station, the clock signal of the master station being given by an external reference means, the two stations being connected by a Powerline Communication, PLC, network, including the steps of:

　　- determining a common time reference for the two stations from an alternating current of said PLC network;
　　- updating (23) the clock signal of the slave station by applying a clock value determined from the common time reference,
　　the common time reference being transmitted from the master station to the slave station via the PLC network.

2. The method according to claim 1, wherein the common time reference is a time value given by the clock signal of the master station, the time value corresponding to a first moment (25A) when the alternating current reaches a particular value.

3. The method according to claim 2, wherein the particular value is reached when the alternating current is zero and increasing (37).

4. The method according to one of claims 2 and 3, further including the steps of:

　　- generating (14B) by the master station a synchronisation frame including the common time reference;
- transmitting (15) the synchronisation frame from the master station to the slave station;
- extracting (17) by the slave station the common time reference from the synchronisation frame;
- at a second moment (25B) when the alternating current reaches the particular value, the second moment being subsequent to the extraction, at the slave station:

    -- determining (21) the number of elapsed periods between the first moment (25A) and the second moment (25B);
    -- calculating (22) the clock value by adding the common time reference with the duration corresponding to the number of elapsed periods;
    -- updating (23) the clock signal of the slave station by applying the clock value to the clock signal of the slave station at said second moment.

5. The method according to claim 1, wherein the alternating current of said PLC network includes a plurality of periodic signals, these signals being phase shifted relative to each other; and
wherein the common time reference is a time value corresponding to a first moment when a given signal among said plurality of signals reaches a particular value;
the method further including the steps of:

    - generating (14B) by the master station a synchronisation frame including said common time reference;
    - transmitting (15) the synchronisation frame from the master station to the slave station;
    - extracting (17) by the slave station the common time reference from the synchronisation frame;
    - determining the given signal among said plurality of signals from an information of phase shift of the periodic signals between the master station and the slave station;
    - at a second moment (25B) when the given signal reaches said particular value, the second moment being subsequent to said determination of the given signal, at the slave station:

        - - determining (21) the number of elapsed periods between the first moment and the second moment;
        - - calculating (22) the clock value by adding the common time reference with the duration corresponding to the number of elapsed periods;
        - - updating (23) the clock signal of the slave station by applying the clock value to the clock signal of the slave station at said second moment.

6. The method according to claim 5, wherein the PLC network meets the ITU-T G.9903 standard, and wherein the phase shift information is stored at the slave station and is given by the PhaseDifferential variable.

7. The method according to one of the preceding claims, wherein the external reference means is a server of the Network Time Protocol, NTP, type.

8. A method for synchronising stations of a Powerline Communication, PLC, network, the network including a master station (26) and a set (27, 28, 29, 30) including at least two slave stations, the method including:

    - a first step of implementing the synchronisation method within the meaning of one of the preceding claims between the master station (26) and a first plurality of slave stations (27, 29) of said set which are direct neighbours of the master station on said PLC network;
    - a second step of implementing the synchronisation method within the meaning of one of the preceding claims between the first plurality of slave stations (27, 29) synchronised during said first step and a second plurality of slave stations (28, 30) of said set which are direct neighbours of at least one slave station of said first plurality, and wherein the second step is repeated until all the slave stations of said set have been synchronised.

9. The method according to claim 8, wherein the first step further includes incrementing a counting variable at the slave stations of said first plurality, and wherein, during the second step and the subsequent steps corresponding to said repetitions of the second step, only the slave stations of said second plurality for which the counting variable is strictly less than the counting variable of the slave stations of said first plurality are synchronised.

10. A computer program including instructions for the implementation of all the steps of the method according to any one of the preceding claims, when these instructions are executed by a processor (33).

11. A slave station connected to a Powerline Communication, PLC, network, including a clock signal, the slave station being connected to a master station by said PLC network, said slave station including:

    - means for receiving a common time reference for the two stations from an alternating current of said PLC network; the common time reference being received from the PLC network,
- a processor (33) arranged to carry out the operations of:

- - calculating a clock value from said common time reference;
- - updating the clock signal by applying the clock value to said clock signal.

12. A master station connected to a Powerline Communication, PLC, network, including a clock signal, the master station being connected to a slave station by said PLC network, said master station including:

- means for communicating with an external reference means from which the clock signal is deduced;
- a processor (33) arranged to perform an operation of determining a common time reference for the two stations from an alternating current of said PLC network;
- means for sending said common time reference via the PLC network.

13. A Powerline Communication, PLC, network, the network including a master station and a set including at least two slave stations, the master station and the set of slave stations including a processor arranged to implement the method according to claim 8.

# FIG. 1
## (ART ANTÉRIEUR)

FIG. 2

SUPERV

DOMIN | SERV

SYNC 12

WT 14A

CLK $t_0$ 13

GEN
MTSM_SYNC_FRAME 14B

ENV
MTSM_SYNC_FRAME

T1

15

T2

FIG. 3

REC
MTSM_SYNC_FRAME 16

BEG
CNT 19

17 EXTR
$t_0$

T3

STOP
CNT 20

22 CALC
$t = t_0 + \Delta T$

CALC
$\Delta T$

21

23 APPLI
$t$

FIG. 4A

FIG. 4B

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012076133 A

**Littérature non-brevet citée dans la description**

- **H. FRANK ; A. MITTNACHT, D. RAPPOLD ; S. MAHLKNECHT.** Clock Synchronization of Distributed Computers in Building Automation Networks Using an AC Power Supply. Vienna University of Technology